# EUROPÄISCHE PATENTSCHRIFT

(11) **EP 3 910 882 B1**
(45) Veröffentlichungstag und Bekanntmachung des Hinweises auf die Patenterteilung: **13.12.2023**
(21) Anmeldenummer: 20174701.1
(22) Anmeldetag: 14.05.2020
(51) Int. Cl.: H04L 43/0805, H04L 41/0816, H04L 41/0823, H04L 43/0817, H04L 43/065, H04L 43/10, H04L 43/50

(54) **AUSFALLSICHERER BETRIEB EINES NETZWERKS**
FAIL-SAFE OPERATION OF A NETWORK
FONCTIONNEMENT À SÉCURITÉ INTÉGRÉE D'UN RÉSEAU

(43) Veröffentlichungstag der Anmeldung: 17.11.2021
(73) Patentinhaber: ise Individuelle Software und Elektronik GmbH, 26122 Oldenburg (DE)
(72) Erfinder: STÜHRENBERG, Olaf, 26123 Oldenburg (DE)
(74) Vertreter: Angerhausen, Christoph

(56) Entgegenhaltungen:
- EP-A1- 2 228 946
- CN-B- 103 944 698
- US-A- 6 108 300
- US-A1- 2013 096 696

## Beschreibung

### TECHNISCHES GEBIET

Die hier offenbarte Erfindung liegt auf dem Gebiet der Netzwerktechnik und umfasst Maßnahmen zur Ausfallsicherheit von Netzwerken.

### HINTERGRUND

Um die Sicherheit von Daten in Netzwerken zu erhöhen, sind im Stand der Technik diverse Maßnahmen bekannt, die insbesondere auf Rücksicherungen (Backups) von Daten beruhen. Ein bekanntes Beispiel sind sogenannte RAID-Systeme, in denen Daten redundant auf mehreren Datenspeichern gesichert werden. Bei Ausfall eines Datenspeichers ersetzt einer der anderen Datenspeicher den ausgefallenen Speicher. Jedoch sind derartige Systeme auf zentrale Speicherungen von Daten beschränkt, und auf einem RAID-System laufen keine Prozesse ab, die aktiv zur Netzwerksicherheit beitragen. Der vorliegenden Erfindung liegt somit die Aufgabe zugrunde, nicht nur die Sicherheit der eigentlichen Daten zu gewährleisten, sondern den Betrieb eines Netzwerks aufrechtzuerhalten.

Die Druckschrift US 6 108 300 A offenbart zwei Vorrichtungen, "Primary Server" und "Backup Server", die nacheinander Netzwerkfunktionen übernehmen.

### ZUSAMMENFASSUNG

Die Erfindung ist definiert in den beigefügten unabhängigen Ansprüchen, worauf Bezug genommen werden soll. Vorteilhafte Merkmale sind in den abhängigen Ansprüchen aufgeführt.

### KURZE BESCHREIBUNG DER ZEICHNUNGEN

Figuren 1A und 1B zeigen beispielhafte Netzwerke, die sich zur Implementation von Ausführungsformen der Erfindung eignen.
Figuren 2, 3 und 4 zeigen erfindungsgemäße Verfahren.

### AUSFÜHRLICHE BESCHREIBUNG

In einem Netzwerk fallen vielfältige Funktionen an, die durch bestimmte Netzwerkknoten durchgeführt werden, beispielsweise das Erzeugen, das Routing und der Empfang von Datenpaketen im Netzwerk sowie Durchführen von Firewallaufgaben. Die Ausfallsicherheit eines Netzwerkknotens ist insbesondere dann relevant, wenn der Netzwerkknoten Teil mehrerer Netzwerke ist. In der Gebäudeautomation werden häufig mehrere Netzwerke verwendet, beispielsweise KNX-Netzwerke, Ethernet-Netzwerke und andere, und bestimmte Netzwerkknoten sind mit mehreren solcher Netzwerke verbunden, um zwischen diesen Netzwerken Pakete zu vermitteln und andere Funktionen zu übernehmen.

In einer Ausführungsform der Erfindung empfängt ein Netzwerkknoten, hier als Vorrichtung oder Teilnehmer bezeichnet, Datenpakete aus einem der Netzwerke, und verarbeitet diese. In vielen Fällen werden die Daten solcher Pakete lokal auf der Vorrichtung gespeichert, beispielsweise wenn die Vorrichtung der Adressat dieser Pakete ist oder wenn durch einen auf dieser Vorrichtung eingeloggten Benutzer direkt auf dieser Vorrichtung gearbeitet wird. Erfindungsgemäß sendet die Vorrichtung sämtliche Daten, die sie selbst speichert, in Kopie an eine vorbestimmte zweite Vorrichtung. Diese zweite Vorrichtung ist mit dem oder den gleichen Netzwerken wie die erste Vorrichtung verbunden und kann in der ersten Vorrichtung durch Benutzereingabe definiert sein. Alternativ kann die zweite Vorrichtung durch die erste Vorrichtung ermittelt werden durch Aufrufen einer zu diesem Zweck definierten Funktion.

Die erste und die zweite Vorrichtung sind jeweils mit einer oder mehreren Adressen in dem oder den Netzwerken assoziiert. Die erste Vorrichtung verwendet beispielsweise die Adressen der zweiten Vorrichtung, um ihre Daten in Kopie an die zweite Vorrichtung zu senden. Die zweite Vorrichtung speichert die erhaltenen Daten.

Die erste Vorrichtung ist eingerichtet, in regelmäßigen Intervallen einen Selbsttest durchzuführen. Der Selbsttest kann alternativ zu festgesetzten und/oder unregelmäßigen Zeitpunkten durchgeführt werden, beispielsweise zu Zeitpunkten, die durch Benutzereingabe definiert werden. Der Selbsttest kann beispielsweise eine Prüfung der Hardware und/oder Software der ersten Vorrichtung auf deren Funktionsfähigkeit umfassen. Eine solche Prüfung kann etwa das Überprüfen von Prozessen auf der ersten Vorrichtung umfassen, wobei geprüft wird, ob eine vorbestimmte Anzahl von Prozessen auf der ersten Vorrichtung abläuft oder ob vorbestimmte Prozesse im Rahmen vorgegebener Ressourcen ablaufen. Weitere mögliche Prüfungen sind Ermitteln, in welchem Umfang ein lokaler Speicher oder Prozessor der ersten Vorrichtung verwendet wird.

Wird der Selbsttest regelmäßig durchgeführt, sendet die erste Vorrichtung nach Abschluss des Selbsttests einen Testbericht an die zweite Vorrichtung. In der zweiten Vorrichtung wird dieser Testbericht untersucht, beispielsweise durch Vergleich von getesteten Parametern der ersten Vorrichtung mit vorgegebenen Rahmenwerten. Alternativ kann der Testbericht bereits selbst angeben, ob der Test positiv ist, beispielsweise indem bereits auf der ersten Vorrichtung festgestellt wird, ob getestete Parameter der ersten Vorrichtung im Rahmen vorgegebener Werte liegen. Die zweite Vorrichtung erhält auf diese Weise einen Hinweis darauf, ob die erste Vorrichtung ihre Funktionen bestimmungsgemäß erfüllt. Die zweite Vorrichtung kann in dieser Ausführungsform bereits dann von einer Funktionsstörung der ersten Vorrichtung ausgehen, wenn die regelmäßig versendeten Testberichte ausbleiben, beispielsweise durch Überschreiten einer vorgegebenen Wartedauer.

Wird der Selbsttest hingegen zu festgesetzten Zeitpunkten durchgeführt, kann eine Funktionsstörung der ersten Vorrichtung durch die zweite Vorrichtung lediglich durch Untersuchen des Testberichts ermittelt werden.

Stellt die zweite Vorrichtung auf einem dieser Wege fest, dass in der ersten Vorrichtung eine Funktionsstörung vorliegt, leitet die zweite Vorrichtung Schritte ein, um die Funktionen der ersten Vorrichtung dort zu beenden und deren Durchführung durch die zweite Vorrichtung zu übernehmen. Diese Schritte umfassen das Ausgeben und Übermitteln eines oder mehrerer Befehle an die erste Vorrichtung. Durch diese Befehle soll die erste Vorrichtung zu einer Selbstkonfiguration veranlasst werden, die es umfasst sämtliche Netzwerk-Funktionen einzustellen und sich selbst mit den Adressen, die bisher durch die zweite Vorrichtung verwendet wurden, zu konfigurieren. Parallel zum Übersenden dieser Befehle führt die zweite Vorrichtung eine Selbstkonfiguration durch zur Verwendung der Adressen, die bisher durch die erste Vorrichtung verwendet wurden; ein Abwarten auf eine Bestätigung der ersten Vorrichtung ist nicht vorgesehen, da der Vorgang zur Übernahme der Funktionen auch dann durchgeführt wird, wenn die erste Vorrichtung zur Übersendung einer Bestätigung gar nicht mehr in der Lage ist. Um zu vermeiden, dass der Wechsel irrtümlich, also beispielsweise aufgrund einer vorübergehenden Verzögerung in der ersten Vorrichtung oder im Netzwerk, durchgeführt wird, kann die zweite Vorrichtung in einer bestimmten Ausführungsform die erste Vorrichtung mehrfach auffordern, eine Bestätigung oder einen aktuellen Testbericht zu senden, und kann bei Empfangen einer solchen Antwort innerhalb einer vorbestimmten Zeitdauer im bisherigen Betrieb verbleiben.

Die zweite Vorrichtung informiert weitere Teilnehmer (Hosts) des oder der Netzwerke von der Änderung der Adressen; insbesondere werden solche Teilnehmer verständigt, die in dem oder den Netzwerken Routingaufgaben durchführen, falls diese nicht ohnehin bisher durch die erste Vorrichtung durchgeführt wurden..

Die zweite Vorrichtung führt anschließend sämtliche Funktionen durch, die zuvor durch die erste Vorrichtung durchgeführt worden waren. Insbesondere kann die zweite Vorrichtung auch dazu eingerichtet sein, in regelmäßigen Intervallen oder zu vorbestimmten Zeitpunkten die bereits beschriebenen Selbsttests durchzuführen und Testberichte entweder an die erste Vorrichtung oder an eine vorbestimmte Adresse, beispielsweise die Adresse eines Betreibers des oder der Netzwerke, zu senden. Desgleichen kann die zweite Vorrichtung eingerichtet sein, Daten, die beim Durchführen der Funktionen anfallen und auf der zweiten Vorrichtung gespeichert werden, in Kopie an die erste Vorrichtung oder die vorbestimmte Adresse zu senden; auf diese Weise bietet die Erfindung die Möglichkeit, nach der Adressänderung die gleichen Sicherheitsmaßnahmen wie zuvor zu ergreifen. Ein Betreiber, der von der Änderung Kenntnis erhält, kann dann ohne Unterbrechung des Netzwerkbetriebs die erste Vorrichtung ersetzen oder reparieren, so dass die erste und die zweite Vorrichtung erneut einen Wechsel durchführen können, falls auf der zweiten Vorrichtung eine Funktionsstörung festgestellt wird. Ein Betreiber kann beispielsweise durch LED-Leuchten an der betroffenen Vorrichtung über deren Zustand informiert werden.

Die erste und die zweite Vorrichtung sind vorzugsweise von identischer Bauart, um zu gewährleisten, dass die zweite Vorrichtung nach der Adressänderung sämtliche Funktionen der ersten Vorrichtung übernehmen kann.

In einer besonderen Ausführungsform sieht die Erfindung eine Kette von Vorrichtungen vor. Die Kette wird durch eine geeignete Datenstruktur dargestellt, beispielsweise durch eine verlinkte Liste oder einen Array, der/die auf den beteiligten Vorrichtungen gespeichert ist. Nach Feststellen einer Funktionsstörung in einer der Vorrichtungen erfolgt eine Übernahme der Funktionen durch eine nächste Vorrichtung in der Kette. Bei Auftreten einer Funktionsstörung wird deren Funktionalität wiederum durch eine dritte Vorrichtung übernommen. Auf diese Weise wird ein hoher Grad an Ausfallsicherheit erzielt, da die ausgefallenen oder gestörten Vorrichtungen nicht umgehend ersetzt oder repariert zu werden brauchen, wenn ihre Funktionen einmal durch eine weitere Vorrichtung übernommen wurden. Stets sendet diejenige Vorrichtung, die die Funktionen durchführt, ihre gespeicherten Daten in Kopie an die nächste Vorrichtung in der Kette, so dass zu jedem Zeitpunkt eine sofort funktionsfähige Vorrichtung bereitsteht.

In einer weiteren Ausführungsform werden die Selbsttests nicht nur durch diejenige Vorrichtung ausgeführt, die aktiv Netzwerkfunktionen ausführt, sondern auch durch diejenige Vorrichtung, die als zweite Vorrichtung mit Daten aktualisiert wird. In dieser Ausführungsform prüfen die beiden Vorrichtungen nicht nur die Funktionsfähigkeit der aktiven Vorrichtung, sondern auch die Funktionsfähigkeit der zweiten Vorrichtung, um zu sicherzustellen, dass eine Übergabe der Funktionen der ersten Vorrichtung jederzeit möglich und erfolgreich ist. Beispielsweise kann die zweite Vorrichtung einen Selbsttest jedes mal durchführen, wenn sie einen Testbericht von der ersten Vorrichtung erhält, und kann die erste Vorrichtung als Antwort auf einen negativen Testbericht der zweiten Vorrichtung Maßnahmen zur Abhilfe ergreifen. Diese Maßnahmen umfassen beispielsweise Übersenden einer Warnung an eine vorbestimmte Adresse. In Ausführungsformen mit einer Kette von Vorrichtungen kann die erste Vorrichtung alternativ eine nächste Vorrichtung in der Kette auswählen und diese aktualisieren und zur Übernahme von Funktionen vorbereiten.

Ein Betreiber des oder der Netzwerke kann eine erste und eine zweite Vorrichtung zur Durchführung der obigen Schritte bestimmen, indem er zwei Vorrichtungen durch entfernten Zugriff entsprechend konfiguriert, beispielsweise durch Starten entsprechender Prozesse auf zwei solchen Vorrichtungen. Alternativ kann dies durch Betätigen bestimmter Schalter an beiden Vorrichtungen vorgenommen werden. Als Antwort auf ein solches Konfigurieren oder Betätigen können beide Vorrichtungen einander verständigen, beispielsweise in Form einer vorbestimmten "Handshake"-Nachricht, durch die sich die Vorrichtungen gegenseitig über ihre Adressen informieren. Eine solche Handshake-Nachricht kann beispielsweise durch eine der beiden Vorrichtungen wiederholt versendet werden, bis sie durch die andere Vorrichtung bestätigt wird. Die Handshake-Nachricht kann beispielsweise eine MAC-Adresse und/oder IP-Adresse der versendenden Vorrichtung enthalten sowie in bestimmten Ausführungsformen auch einen Typ der versendenden Vorrichtung und/oder deren Firmware-Version. Anhand dieser Daten kann die andere Vorrichtung prüfen, ob die technischen Merkmale der versendenden Vorrichtung ausreichen, um die Funktionalität der anderen Vorrichtung zu übernehmen, oder ob die versendende Vorrichtung mit der anderen Vorrichtung baugleich ist und/oder identisch konfiguriert ist. Beispielsweise muss die versendende Vorrichtung über sämtliche Anwendungen verfügen, die zur Durchführung der Funktionen erforderlich ist, und muss vorzugsweise über sämtliche Anwendungen verfügen, die auf der anderen Vorrichtung installiert sind.

Beispiele für die genannten Netzwerke sind unter anderem KNX- und TCP/IP-Netzwerke. In einem KNX-Netzwerk können die beteiligten Vorrichtungen von der Engineering Tool Software (ETS) aus konfiguriert werden. Die zweite Vorrichtung kann beispielsweise mit einer speziellen Adresse versehen werden. In einer Ausführungsform wird auf diesem Wege festgelegt, dass diese Adresse von anderen Teilnehmern des Netzwerks nicht verwendet werden darf. In einem TCP/IP-Netzwerk kann zur Konfiguration der Vorrichtungen ein DHCP-Server verwendet werden, bei dem sich die zweite Vorrichtung eingangs anmeldet und über den sie mit der ersten Vorrichtung kommuniziert; zu diesem Zweck kann die Kommunikation beispielsweise über eine REST-Schnittstelle des DHCP-Servers vorgenommen werden.

Die Selbstkonfiguration, die von beiden Vorrichtungen vorgenommen wird, um fortan unter der Netzwerkadresse der jeweils anderen Vorrichtung zu arbeiten, wird je nach Netzwerktyp unterschiedlich implementiert. In einem Ethernet werden die Teilnehmer des Netzwerks durch IP-Adressen referenziert. Die IP-Adressen sind logische Adressen, die 32 Bit umfassen und bekanntlich in vier Tupel zu jeweils 8 Bit unterteilt sind. Im Ethernet werden diese IP-Adressen auf physikalische Adressen abgebildet. Diese physikalischen Adressen umfassen 48 Bit in sechs Tupeln zu jeweils 8 Bit, werden auch als MAC-Adressen bezeichnet, und sind einer Netzwerkschnittstelle eines Teilnehmers fest zugeordnet und nicht veränderbar. Um den Empfänger eines Pakets im Ethernet anhand der IP-Adresse des Pakets zu ermitteln, muß die zugehörige MAC-Adresse ermittelt werden. Dies erfolgt beispielsweise durch ARP (Adress Resolution Protocol); hierbei wird eine ARP-Anfrage mit der IP-Adresse an jeden Teilnehmer des Netzwerks gesendet (broadcast). Nur derjenige Teilnehmer, dessen MAC-Adresse der IP-Adresse entspricht, antwortet auf die Anfrage. Das Paket wird anschließend an diesen Teilnehmer gesendet. Um den Datenverkehr, der durch die ARP-Anfragen entsteht, zu reduzieren, unterhalten die Teilnehmer jeweilige ARP-Caches, in denen die Abbildungen der IP-Adressen auf MAC-Adressen für eine vorbestimmte Zeitspanne gespeichert werden.

Die erfindungsgemäße Selbstkonfiguration kann in einem Ethernet von Seiten der ersten Vorrichtung implementiert werden dadurch, dass die Vorrichtung auf Anfragen, die deren bisherige IP-Adresse enthalten, nicht mehr antwortet, und dass die Vorrichtung auf Anfragen, die die bisherige IP-Adresse der zweiten Vorrichtung enthalten, antwortet. Die Selbstkonfiguration kann ferner umfassen, die übrigen Teilnehmer des Netzwerks über den Adresswechsel zu informieren; insbesondere werden die Teilnehmer mittels entsprechender Anfragen angewiesen, ihre ARP-Caches zu löschen oder zumindest die Einträge, die die beiden IP-Adressen der ersten und der zweiten Vorrichtung enthalten, zu aktualisieren oder zu löschen.

Die Vorteile der Erfindung bestehen in einem reibungslosen Betrieb des oder der Netzwerke selbst im Falle einer Funktionsstörung einer Vorrichtung, die netzwerkrelevante Funktionen durchführt. Diese Wirkung beruht auf der Idee, Daten solcher Funktionen in einer zweiten Vorrichtung zu spiegeln, und überdies Sorge dafür zu tragen, dass diese Vorrichtung jederzeit in der Lage ist, den Betrieb von der ersten Vorrichtung sofort zu übernehmen, ohne dass dies für die übrigen Teilnehmer sichtbar ist.

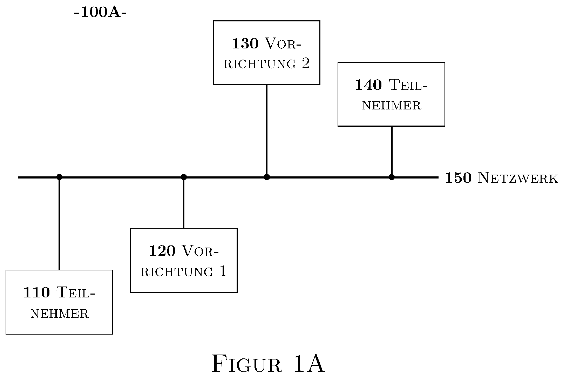

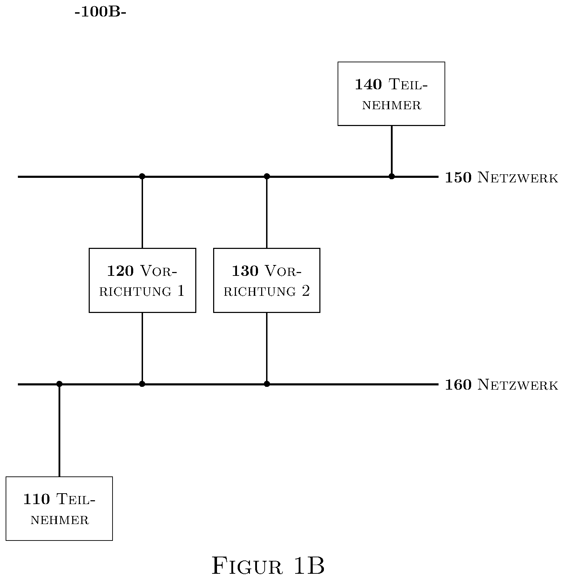

Figuren 1A und 1B zeigen beispielhafte Netzwerktopologien, in denen die Erfindung implementiert werden kann. Figur 1A zeigt ein einzelnes Netzwerk 150 mit mehreren Teilnehmern 110, 120, 130, 140, von denen die Vorrichtungen 120 und 130 als erste und zweite Vorrichtung im Sinne der obigen Beschreibungen dienen. Grundsätzlich kann jeder Teilnehmer des Netzwerks die erfindungsgemäßen Maßnahmen implementieren; jedoch sollten zwei Teilnehmer, die als erste und zweite Vorrichtungen dienen, vorzugsweise einen gleichen Gerätetyp aufweisen. Bevorzugt ist ferner, dass die zweite Vorrichtung zumindest diejenigen Anwendungen vorhält, die die erste Vorrichtung zum Durchführen von Netzwerkfunktionen verwendet. Bevorzugt wird ferner, dass beide Vorrichtungen mit zwei Netzwerken verbunden sind, es handelt sich bei beiden Vorrichtungen um dieselben Netzwerke.

Figur 1B zeigt zwei unabhängig voneinander betriebene Netzwerke 150 und 160, beispielsweise ein KNX- und eine Ethernet-Netzwerk. Die Teilnehmer 110 und 140 sind jeweils lediglich mit einem der beiden Netzwerke verbunden. Die Teilnehmer 120 und 130 sind jeweils mit beiden Netzwerken verbunden und eignen sich besonders zur Implementierung der Erfindung, die sie aufgrund ihrer Anordnung in der Topologie auf beide Netzwerke direkt zugreifen können und somit Netzwerkfunktionen, beispielsweise Routingaufgaben, übernehmen können. Aus dem gleichen Grund sind diese Vorrichtungen für den Betrieb der Netzwerke und die netzwerkübergreifende Kommunikation von Bedeutung, so dass die durch die Erfindung erzielten Vorteile den damit verbundenen Einsatz von Ressourcen (zweite Vorrichtung mit redundanter Datenspeicherung) überwiegen.

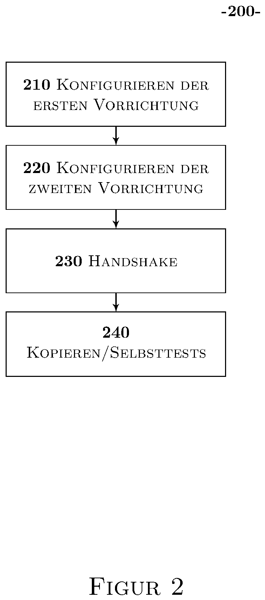

Figur 2 zeigt ein Verfahren 200 zur erstmaligen Einrichtung einer erfindungsgemäßen ersten und zweiten Vorrichtung. Das Verfahren lässt sich auf beliebiger Teilnehmer der Figuren 1A und 1B anwenden, wird jedoch bevorzugt auf die in den Figuren als Vorrichtung 1 und Vorrichtung 2 bezeichneten Teilnehmer angewendet. In einem ersten Schritt 210 erfolgt Konfigurieren eines Teilnehmers als erste Vorrichtung, in einem zweiten Schritt 220 wird ein weiterer Teilnehmer als zweite Vorrichtung konfiguriert. Beide Schritte können in beliebiger Reihenfolge durchgeführt werden. In einer bevorzugten Ausführungsform erfolgen beide Schritte durch manuelles Betätigen von entsprechenden Schaltern an den Geräten durch einen Betreiber. Es kann vorgesehen sein, dass die Schalter mehrfach betätigt werden und durch eine Anzahl von Betätigungen jeweils definiert wird, ob ein Teilnehmer als erste oder als zweite Vorrichtung dienen soll; beispielsweise kann ein Schalter eines ersten Teilnehmers dreimal betätigt werden, um diesen als erste Vorrichtung zu konfigurieren, und kann ein Schalter eines zweiten Teilnehmers fünfmal betätigt werden, um diesen als zweite Vorrichtung zu konfigurieren. Alternativ können beide Vorrichtungen via Softwarezugriff konfiguriert werden, unter KNX beispielsweise mithilfe der Software ETS, und in einem TCP/IP-Netzwerk durch einschlägige Konfigurationswerkzeuge.

Sofern beide Vorrichtungen korrekt als erste und zweite Vorrichtungen konfiguriert sind, können beide Vorrichtungen in Schritt 230 einen Handshake durchführen. Hierbei kommunizieren beide Vorrichtungen miteinander und informieren sich gegenseitig über ihre technischen Eigenschaften. Diese Eigenschaften umfassen beispielsweise die jeweiligen Gerätetypen, Firmwareversionen, installierte Anwendungen und deren Versionen und vergleichbare Eigenschaften, insbesondere aber die jeweilige MAC-Adresse und IP-Adresse. Schritt 230 kann auch eine gegenseitige Prüfung der Vorrichtungen umfassen. So kann die erste Vorrichtung beispielsweise prüfen, ob die zweite Vorrichtung über sämtliche Anwendungen verfügt, die auf der ersten Vorrichtung installiert sind, zumindest aber ob die zweite Vorrichtung über sämtliche Anwendungen verfügt, die die erste Vorrichtung zur Durchführung bestimmter Funktionen einsetzt. Die Menge und Konfiguration dieser Anwendungen kann vorbestimmt sein, beispielsweise durch entsprechende Konfigurationsdateien auf der ersten Vorrichtung, die im Zuge von Schritt 210 eingerichtet wurden.

Verläuft der Handshake erfolgreich, fährt das Verfahren 200 bei Schritt 240 fort, wo beide Vorrichtungen den erfindungsgemäßen Betrieb aufnehmen. Die erste Vorrichtung führt vorbestimmte Netzwerkfunkionen aus und kopiert Daten, die hierbei anfallen und auf der ersten Vorrichtung gespeichert werden, an die zweite Vorrichtung. Die zweite Vorrichtung erhält diese Daten und speichert sie lokal ab, vorzugsweise in einer Datenstruktur, die identisch ist mit einer in der ersten Vorrichtung verwendeten Struktur. Ferner führt die erste Vorrichtung Selbsttests durch, deren Ergebnisse in Form von Testberichten an die zweite Vorrichtung übermittelt werden. Die Selbsttests erfolgen in der bereits beschriebenen Form.

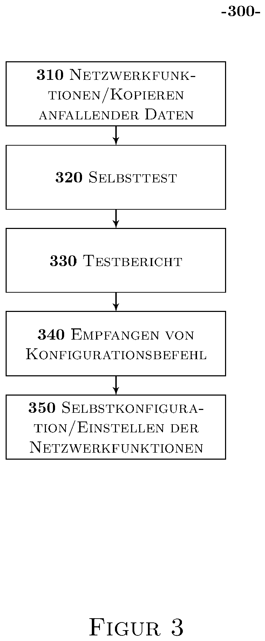

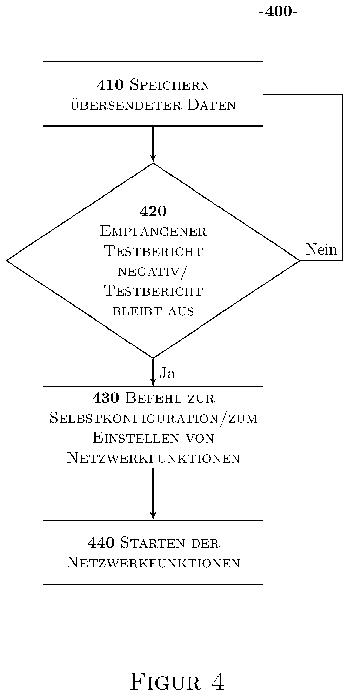

Figuren 3 und 4 zeigen ein weiteres Verfahren 300 und 400, die den erfindungsgemäßen Wechsel von einer ersten Vorrichtung zu einer zweiten Vorrichtung veranschaulichen. Figur 300 zeigt die durch die erste Vorrichtung ausgeführten Schritte, Figur 400 die Schritte der zweiten Vorrichtung.

Schritt 310 der Figur 300 zeigt das Durchführen von Netzwerkfunktionen durch eine erste Vorrichtung. Schritt 310 umfasst auch das Kopieren von Daten, die bei diesen Funktionen anfallen und auf der ersten Vorrichtung gespeichert werden, beispielsweise bestimmte Konfigurationsdaten, die bei einem Fernzugriff anfallen und auf der ersten Vorrichtung abgelegt werden. Diese Daten werden an die zweite Vorrichtung gesendet. In Schritt 320 führt die erste Vorrichtung einen Selbsttest aus, der hier bereits beschrieben wurde. Das Ergebnis dieses Selbsttests wird in Schritt 330 als Testbericht an die zweite Vorrichtung übermittelt. Infolge einer Prüfung der Testergebnisse in der zweiten Vorrichtung erhält die erste Vorrichtung von der zweiten Vorrichtung gegebenenfalls einen Befehl zum Selbstkonfigurieren. Dies erfolgt typischerweise, wenn die Testergebnisse anzeigen, dass der Test negativ war und beispielsweise auf eine Funktionsstörung der ersten Vorrichtung hinweist. Alternativ kann der Befehl übermittelt werden, wenn der Testbericht regelmäßig an die zweite Vorrichtung übermittelt werden soll, dort jedoch über eine vorbestimmte Zeitspanne hinaus ausbleibt. Die erste Vorrichtung empfängt bei Schritt 340 den Konfigurationsbefehl und stellt die bisher durchgeführten Netzwerkfunktionen ein. Ferner konfiguriert sich die erste Vorrichtung selbst, um fortan unter der bisherigen Netzwerkadresse der zweiten Vorrichtung zu arbeiten.

Die Figur 4 zeigt die Schritte des Verfahrens, die durch die zweite erfindungsgemäße Vorrichtung durchgeführt werden. In Schritt 410 speichert die Vorrichtung Daten, die sie von der ersten Vorrichtung erhält, in Schritt 420 prüft die zweite Vorrichtung, ob ein von der ersten Vorrichtung empfangener Testbericht negativ ist, beziehungsweise prüft, ob ein regelmäßig erwarteter Testbericht über eine vorbestimmte Zeitspanne hinaus ausgeblieben ist. Im zweiten Fall kann die Zeitspanne beispielsweise ein Mehrfaches des festgesetzten Intervalls umfassen, also beispielsweise 3×10min, wenn das Intervall 10min beträgt.

Ist der Testbericht negativ beziehungsweise bleibt der Testbericht aus, richtet die zweite Vorrichtung in Schritt 430 einen Befehl zur Selbstkonfiguration an die erste Vorrichtung. Der Befehl weist die erste Vorrichtung an, das Durchführen von Netzwerkfunktionen einzustellen und fortan die bisherige Adresse der zweiten Vorrichtung zu verwenden. In Schritt 440 konfiguriert sich die zweite Vorrichtung mit der bisherigen IP-Adresse der ersten Vorrichtung, analog zu der oben beschriebenen Konfiguration der ersten Vorrichtung, und nimmt die Durchführung der Netzwerkfunktionen auf. In bestimmten Ausführungsformen umfasst Schritt 440 auch Ermitteln einer neuen ersten Vorrichtung, die hinsichtlich Gerätetyp und Installation in der Lage ist, im Falle einer Funktionsstörung der zweiten Vorrichtung deren Netzwerkfunktionen zu übernehmen, und die fortlaufend von der zweiten Vorrichtung mit anfallenden Daten versorgt wird, um im Bedarfsfall sofort einsatzbereit zu sein.

Die Erfindung ermöglicht somit einen reibungslosen Fortbetrieb von Netzwerkfunktionen im Falle eines Ausfalls einer Vorrichtung, die diese Funktionen ausführt. Dies wird erfindungsgemäß durch fortgesetztes Aktualisieren einer zweiten Vorrichtung erzielt sowie durch einen Wechsel der von den beteiligten Vorrichtungen verwendeten IP-Adressen. Die Erfindung kommt mit geringem Implementationsaufwand aus, da die Aktualisierungsschritte und der Wechsel nur geringen Datenverkehr und im wesentlichen nur lokale Konfigurationen benötigt.

## Patentansprüche

1. Verfahren, umfassend:
Durchführen (310) von Funktionen in einem oder mehreren Netzwerken (150, 160) durch eine erste Vorrichtung (120), Senden sämtlicher Daten, die bei der Durchführung anfallen und auf der ersten Vorrichtung (120) gespeichert werden, an eine zweite Vorrichtung (130), und Speichern (410) dieser Daten in der zweiten Vorrichtung (130), wobei die erste Vorrichtung (120) mit einer oder mehreren ersten Adressen und die zweite Vorrichtung (130) mit einer oder mehreren zweiten Adressen in den ein oder mehreren Netzwerken (150, 160) assoziiert ist;
in regelmäßigen Intervallen oder zu vorbestimmten Zeitpunkten Durchführen (320) eines Selbsttests durch die erste Vorrichtung (120) und Senden (330) eines Testergebnisses an die zweite Vorrichtung (130); und
als Antwort auf ein Ausbleiben (420) des Testergebnisses oder als Antwort auf ein negatives Testergebnis Ausgeben (420) eines Befehls durch die zweite Vorrichtung (130) an die erste Vorrichtung (120) zum Einstellen des Durchführens von Funktionen und zum Selbstkonfigurieren mit den ein oder mehreren zweiten Adressen; und
Selbstkonfigurieren der zweiten Vorrichtung (130) mit den ein oder mehreren ersten Adressen;
wobei beide Vorrichtungen (120, 130) Teil einer Kette mehrerer Vorrichtungen sind, wobei die Kette durch eine Datenstruktur dargestellt ist, die auf jeder der Vorrichtungen (120, 130) gespeichert ist, und wobei im Falle eins ausbleibenden oder negativen Testergebnisses einer Vorrichtung die jeweils nächste Vorrichtung in der Kette das Durchführen (310) der Funktionen übernimmt und Daten speichert und an die wiederum nächste Vorrichtung der Kette kopiert.

2. Verfahren nach einem der vorstehenden Ansprüche, wobei das Ausbleiben des Testergebnisses vorliegt, wenn innerhalb eines vorgegebenen Intervalls kein Testergebnis an die zweite Vorrichtung (130) übermittelt wurde.

3. System, umfassend:
eine erste und eine zweite Vorrichtung (120, 130), wobei die erste Vorrichtung (120) mit einer oder mehreren ersten Adressen und die zweite Vorrichtung (130) mit einer oder mehreren zweiten Adressen in einem oder mehreren Netzwerken (150, 160) assoziiert ist;
wobei die erste Vorrichtung (120) eingerichtet ist zum Durchführen (310) von Funktionen in den ein oder mehreren Netzwerken (150, 160), zum Senden sämtlicher Daten, die bei der Durchführung (310) anfallen und auf der ersten Vorrichtung (120) gespeichert werden, an die zweite Vorrichtung (130), und zum Durchführen (320) eines Selbsttests in regelmäßigen Intervallen oder zu vorbestimmten Zeitpunkten und Senden (330) eines Testergebnisses an die zweite Vorrichtung (130); und
wobei die zweite Vorrichtung (130) eingerichtet ist, die von der ersten Vorrichtung (120) erhaltenen Daten zu speichern und als Antwort auf ein Ausbleiben (420) des Testergebnisses oder als Antwort auf ein negatives Testergebnis einen Befehl an die erste Vorrichtung (120) zum Einstellen des Durchführens von Funktionen und zum Selbstkonfigurieren mit den ein oder mehreren zweiten Adressen zu senden (430) und eine Selbstkonfiguration mit den ein oder mehreren ersten Adressen durchzuführen,
wobei beide Vorrichtungen (120, 130) Teil einer Kette mehrerer Vorrichtungen sind, wobei die Kette durch eine Datenstruktur dargestellt ist, die auf jeder der Vorrichtungen (120, 130) gespeichert ist, und wobei im Falle eins ausbleibenden oder negativen Testergebnisses einer Vorrichtung die jeweils nächste Vorrichtung in der Kette das Durchführen (310) der Funktionen übernimmt und Daten speichert und an die wiederum nächste Vorrichtung der Kette kopiert.

4. System nach Anspruch 3, wobei das Ausbleiben des Testergebnisses vorliegt, wenn innerhalb eines vorgegebenen Intervalls kein Testergebnis an die zweite Vorrichtung (130) übermittelt wurde.

## Claims

1. A method comprising:
performing (310), by a first device (120), functions in one or more networks (150, 160), sending, to a second device (130), all data that is incurred in the performing and stored on the first device (120), and storing (410) that data in the second device (130), wherein the first device (120) is associated with one or more first addresses and the second device (130) is associated with one or more second addresses in the one or more networks (150, 160);
at regular intervals or at predetermined times, performing (320), by the first device (120), a self-test and sending (330) a test result to the second device (130); and
in response to an absence (420) of the test result or in response to a negative test result, issuing (420), by the second device (130), a command to the first device (120) to cease performing functions and to self-configure with the one or more second addresses; and
self-configuring the second device (130) with the one or more first addresses;
wherein both devices (120, 130) are part of a chain of multiple devices, wherein the chain is represented by a data structure that is stored on each of the devices (120, 130), and wherein in case of an absence or negative test result of a device, the next device in the chain in each case takes over the performing (310) of the functions and stores and copies data to the next device of the chain in turn.

2. The method according to any one of the preceding claims, wherein the absence of the test result is present if no test result has been transmitted to the second device (130) within a predetermined interval.

3. A system comprising:
a first and a second device (120, 130), wherein the first device (120) is associated with one or more first addresses and the second device (130) is associated with one or more second addresses in one or more networks (150, 160);
wherein the first device (120) is configured for performing (310) functions in the one or more networks (150, 160), for sending, to the second device (130), all data that is incurred in the performing (310) and stored on the first device (120), and for performing (320) a self-test at regular intervals or at predetermined times and sending (330) a test result to the second device (130); and
wherein the second device (130) is configured to store the data obtained from the first device (120) and, in response to an absence (420) of the test result or in response to a negative test result, to send (430) a command to the first device (120) to cease performing functions and to self-configure with the one or more second addresses and to perform a self-configuration with the one or more first addresses,
wherein both devices (120, 130) are part of a chain of multiple devices, wherein the chain is represented by a data structure that is stored on each of the devices (120, 130), and wherein in case of an absence or negative test result of a device, the next device in the chain in each case takes over the performing (310) of the functions and stores and copies data to the next device of the chain in turn.

4. The system according to claim 3, wherein the absence of the test result is present if no test result has been transmitted to the second device (130) within a predetermined interval.

## Revendications

1. Procédé comprenant :
l'exécution (310) de fonctions dans un ou plusieurs réseaux (150, 160) par un premier dispositif (120), l'envoi de toutes les données qui apparaissent lors de l'exécution et qui sont enregistrées sur le premier dispositif (120) à un deuxième dispositif (130) et l'enregistrement (410) de ces données dans le deuxième dispositif (130), dans lequel le premier dispositif (120) est associé à une ou plus premières adresses et le deuxième dispositif (130) est associé à une ou plusieurs deuxièmes adresses dans le ou les réseaux (150, 160) ;
à des intervalles réguliers ou à des moments prédéterminés, l'exécution (320) d'un auto-test par le premier dispositif (120) et envoi (330) d'un résultat de test au deuxième dispositif (130) ; et
en réponse à une absence (420) de résultat de test ou en réponse à un résultat de test négatif, l'envoi (420) d'une instruction par le deuxième dispositif (130) au premier dispositif (120) pour le réglage de l'exécution de fonctions et pour l'auto-configuration avec la ou les deuxièmes adresses ; et
auto-configuration du deuxième dispositif (130) avec la ou les premières adresses ;
dans lequel les deux dispositifs (120, 130) font partie d'une chaîne de plusieurs dispositifs, dans lequel la chaîne est représentée par une structure de données qui est enregistrée sur chacun des dispositifs (120, 130), et dans lequel, dans le cas d'une absence de résultat de test ou d'un résultat de test négatif d'un dispositif, le dispositif suivant dans la chaîne prend en charge l'exécution (310) des fonctions et enregistre les données et les copie sur le dispositif suivant dans la chaîne.

2. Procédé selon l'une des revendications précédentes, dans lequel il y a absence de résultat de test lorsque, dans un intervalle prédéterminé, aucun résultat de test n'a été transmis au deuxième dispositif (130).

3. Système comprenant :
un premier et un deuxième dispositifs (120, 130), dans lequel le premier dispositif (120) est associé à une ou plusieurs adresses et le deuxième dispositif (130) est associé à une ou plusieurs deuxièmes adresses dans un ou plusieurs réseaux (150, 160) ;
dans lequel le premier dispositif (120) est conçu pour l'exécution (310) de fonctions dans le ou les réseaux (150, 160), pour l'envoi de toutes les données, qui apparaissent lors de l'exécution (310) et qui sont enregistrées sur le premier dispositif (120), au deuxième dispositif (130) et pour l'exécution (320) d'un auto-test à des intervalles réguliers ou à des moments prédéterminés et l'envoi (330) d'un résultat de test au deuxième dispositif (130) ; et
dans lequel le deuxième dispositif (130) est conçu pour enregistrer les données obtenues par le premier dispositif (120) et, en réponse à une absence (420) de résultat de test ou en réponse à un résultat de test négatif, pour l'envoi (430) d'une instruction au premier dispositif (120) pour le réglage de l'exécution de fonction et pour l'auto-configuration avec la ou les deuxièmes adresses et pour exécuter une auto-configuration avec la ou les premières adresses,
dans lequel les deux dispositifs (120, 130) font partie d'une chaîne de plusieurs dispositifs, dans lequel la chaîne est représentée par une structure de données qui est enregistrée sur chacun des dispositifs (120, 130) et dans lequel, dans le cas d'une absence de résultat de test ou d'un résultat de test négatif d'un dispositif, le dispositif suivant dans la chaîne prend en charge l'exécution (310) des fonctions et enregistrée les données et les copie sur le dispositif suivant dans la chaîne.

4. Système selon la revendication 3, dans lequel il y a absence de résultat de test lorsque, dans un intervalle prédéterminé, aucun résultat de test n'a été transmis au deuxième dispositif (130).
